# EUROPÄISCHE PATENTSCHRIFT

(11) **EP 1 876 064 B1**
(45) Veröffentlichungstag und Bekanntmachung des Hinweises auf die Patenterteilung: **24.11.2010**
(21) Anmeldenummer: 07012438.3
(22) Anmeldetag: 26.06.2007
(51) Int. Cl.: B60R 13/02, B60R 21/213, B60R 21/215

(54) **Seitenaufprall-Schutzeinrichtung für Fahrgäste in einem Kraftfahrzeug**
Lateral impact protection device for passengers in a motor vehicle
Dispositif de protection contre les chocs latéraux pour les passagers d'un véhicule automobile

(30) Priorität: 05.07.2006 DE 102006031102
(43) Veröffentlichungstag der Anmeldung: 09.01.2008
(73) Patentinhaber: GM Global Technology Operations, Inc., Detroit, MI 48265-3000 (US)
(72) Erfinder: Bonarens, Frank, 61440 Oberursel (DE); Diehl, Johannes, 55291 Saulheim (DE)
(74) Vertreter: Daniel, Ulrich W.P.

(56) Entgegenhaltungen:
- EP-A- 1 112 900
- EP-A1- 1 238 860
- EP-A2- 0 980 795
- EP-A2- 0 980 796
- DE-A1- 10 004 483

## Beschreibung

Die Erfindung betrifft eine Seitenaufprall-Schutzeinrichtung für Fahrgäste in einem Kraftfahrzeug, mit mindestens einem aufblasbaren, im zusammengefalteten Zustand hinter dem Dachhimmel des Fahrzeuges angeordneten Airbag, dessen Inneres mit einem Gasgenerator in Verbindung bringbar ist.

Ein bei einer solchen Schutzeinrichtung Verwendung findender Airbag, der auch als Curtainairbag bezeichnet wird, ist hinter dem Dachhimmel angeordnet, somit oberhalb des Dachhimmels zwischen diesem und einer Fahrzeugstruktur. Vor dem Entfalten befindet sich das Luftsackmaterial in einem Airbagmodul, das eine harte Schutzhülle umgibt. Diese Schutzhülle ist in ihrem unteren, somit dem Dachhimmel zugewandten Bereich, mit einer Sollbruchstelle versehen. Bei einer Entfaltung wird das im Airbagmodul noch gefaltete Luftsackmaterial von oben mit Druckgas gefüllt. Das Luftsackmaterial bewirkt ein Aufreißen der Sollbruchstelle der Schutzhülle, die eine ausreichend große Öffnung zum Austreten des Airbags in Richtung des Dachhimmels freigibt. Das Luftsackmaterial wird bei weiterer Entfaltung des Airbag auf die Himmeloberfläche gedrückt.

Bei in der Praxis Verwendung findenden Seitenaufprall-Schutzeinrichtungen ist die Reibung zwischen Luftsackmaterial und der Himmeloberfläche, die beispielsweise aus Filz besteht, so groß, dass der größtenteils noch unentfaltete Curtainairbag durch den wegklappenden Dachhimmel mitgerissen wird. Da sich der Dachhimmel in einer Rotationsbewegung befindet, wird der sich noch in der Entfaltung befindliche Airbag durch eine stärkere Anhaftung mehr in Richtung Fahrzeugmitte gelenkt. Solches ist unerwünscht, insbesondere soll der Airbag nicht an den Kopf des Fahrgasts geschleudert werden. Vielmehr soll der Airbag sich benachbart der seitlichen Struktur des Fahrzeugs entfalten, so dass der Fahrgast mit seinem Kopf gegen den entfalteten Airbag gelangt.

Eine Seitenaufprall-Schutzeinrichtung der eingangs genannten Art ist aus der DE 297 20 619 U1 bekannt. Bei dieser ist der Airbag im zusammengefalteten Zustand zumindest hinter der A-Säulenverkleidung des Kraftfahrzeugs angeordnet. Um ein ungehindertes Austreten des Airbags zum Schutz des Fahrgastes zu ermöglichen, ist dort vorgesehen, dass die A-Säulenverkleidung aus einem biegesteifen Material besteht und eine im wesentlichen in Längsrichtung der A-Säule verlaufende Schwenklinie aufweist, um die zumindest ein Verkleidungsabschnitt der A-Säulenverkleidung zur Freigabe eines Austrittsspaltes für den Airbag relativ zur A-Säule in Richtung Fahrgastraum abschwenkbar ist. Es ist dadurch nicht notwendig, die A-Säulenverkleidung als Ganzes von der A-Säule zu lösen, um ein Aufblasen des Airbags zu ermöglichen. Um eine optisch ansprechende Oberfläche der A-Säulenverkleidung zu gewährleisten und um die Biegesteifigkeit weiterhin zu unterstützen, ist ein Dekormaterial auf der Sichtseite der A-Säulenverkleidung aufkaschiert.

In der EP 0 723 893 A1 ist ein Kraftfahrzeug mit in einer Fahrzeugseitenwand angeordneten Seitenfenstern und einem Seitenairbag beschrieben. Dort ist die Fläche des Seitenfensters mit einer transparenten reißfesten Folie überdeckt. Die Folie ist an ihren Rändern mit dem Rahmen des Seitenfensters verbunden. Dadurch kann sich bei Aktivierung des Seitenairbags durch einen Crash der entfaltete Luftsack an der über die Öffnung des Seitenfensters gespannten Folie abstützen, auch wenn das Glas des Seitenfensters beim Crash zerbrochen ist.

Aus der DE 101 64 210 A1 ist eine Innenverkleidung für Fahrzeuge, insbesondere für Türen, Seitenwände, Armaturen, Säulen und Holme in Kraftfahrzeugen, mit einem Aufprallschutz in Form eines Airbags bekannt. Der Airbag ist in einem im inaktiven Zustand von der Verkleidung überdeckten Austrittsbereich angeordnet und breitet sich beim Öffnen zielgerichtet durch den Austrittsbereich hindurch aus. Der Austrittsbereich der Verkleidung ist zweigeteilt und einerseits durch eine Bruchlinie und andererseits durch eine Biegelinie begrenzt, entlang welcher der den Austrittsbereich überdeckende Teil der Verkleidung zur Freigabe des Airbags schwenkbar gehalten ist. Im Bereich des Airbagaustritts ist die Verkleidung mit Dekoreinsätzen versehen. Innerhalb des jeweiligen Dekoreinsatzes liegt der Austrittsbereich. Jeder Dekoreinsatz weist einen Dekorträger auf, auf den unter Zwischenlage eines Schaumrückens eine Dekorhaut aufgebracht ist.

Eine Seitenaufprall-Schutzeinrichtung der eingangs genannten Art ist ferner aus der EP-A2-0 980 795 bekannt. Bei dieser besteht der Dachhimmel aus Kunststoff und ist zweischichtig ausgebildet, wobei die dem Airbag zugewandte Schicht ein Basismaterial und die den Insassen zugewandte Schicht eine Außenhaut aufweist. Bei Auslösung des Airbags kontaktiert dieser die diesem zugewandte Schicht aus dem Basismaterial.

In der DE 100 04 483 A1 ist eine Seitenaufprall-Schutzeinrichtung mit einem Airbag beschrieben, der in zusammengefaltetem Zustand hinter einem Dachhimmel eines Fahrzeugs angeordnet ist. Der Dachhimmel ist zweischichtig ausgebildet, mit einer dem Fahrzeuginsassen zugewandten Außenschicht, die insbesondere aus einem Gewebe gebildet ist, und einer aus Plastik gebildeten, dem Airbag zugewandten Substratschicht, die der Airbag beim Auslösen somit kontaktiert.

Aufgabe der vorliegenden Erfindung ist es, eine Seitenaufprall-Schutzeinrichtung der eingangs genannten Art so weiter zu bilden, dass keine unerwünschte Ablenkung des Airbags am Dachhimmel beim Auslösen des Airbags erfolgt.

Gelöst wird die Aufgabe bei einer Seitenaufprall-Schutzeinrichtung der eingangs genannten Art dadurch, dass der Dachhimmel auf seiner dem Airbag zugewandten Seite, in dem Bereich, der bei aktiviertem Airbag den Airbag kontaktiert, durch Aufbringung eines zusätzlichen Teils in diesem Bereich, glatt ausgebildet ist.

Der Dachhimmel ist somit im interessierenden Bereich nicht aufgeraut oder ist sogar als Formteil mit dem Airbag zugewandten Filz ausgebildet. Vielmehr ist durch die glatte Ausbildung des Dachhimmels auf seiner dem Airbag zugewandten Seite sichergestellt, dass beim Auftreffen des Airbags auf den Dachhimmel nur geringe Reibungskräfte zwischen diesen Teilen wirksam werden, mit der Konsequenz, dass der wegklappende Dachhimmel den großteils noch unentfalteten Airbag nicht mitreißen kann. Der Airbag haftet nicht am Dachhimmel, womit die Rotationsbewegung des Dachhimmels das Entfalten des Airbags nicht negativ beeinflusst.

Durch die erfindungsgemäße Maßnahme gleitet der Airbag leichter am sich öffnenden Dachhimmel ab und zeigt dadurch ein schnelleres und deutlich besseres nach unten gerichtetes Entfaltungsverhalten.

Die erfindungsgemäße Ausbildung des Dachhimmels auf seiner dem Airbag zugewandten Seite, in dem Bereich, der bei aktiviertem Airbag den Dachhimmel kontaktiert, kann auf unterschiedliche Art und Weise bewerkstelligt werden. So wird es als vorteilhaft angesehen, wenn der Dachhimmel auf seiner dem Airbag zugewandten Seite eine Folie oder ein glattes Band aufweist. Es ist genauso denkbar, den Dachhimmel in diesem Bereich oder insgesamt auf seiner dem Fahrzeuginnenraum abgewandten Seite glatt auszubilden. Bei Aufbringen des zusätzlichen Teiles, beispielsweise einer Folie oder eines glatten Bandes, zumindest auf die interessierende Stelle des Dachhimmels, wird es als besonders vorteilhaft angesehen, wenn dieses zusätzliche Teil mit einer Trägerstruktur des Dachhimmels verklebt wird. Dies ermöglicht es, den erfindungsgemäßen Effekt auch dann zu erreichen, wenn der Dachhimmel auf seiner dem Innenraum des Fahrzeugs abgewandten Seite relativ rau ausgebildet ist, beispielsweise kaschiert ist. Es ist dann nur erforderlich, in dem Bereich des Dachhimmels, auf den der Airbag bei Auslösung auftrifft, die Folie oder das Band aufzukleben.

Im Rahmen der Erfindung wird es auch angesehen, wenn ein im Ausgangszustand im betreffenden Bereich rau gestalteter Dachhimmel bearbeitet wird, so dass er dann glatt ist. So ist beispielsweise daran gedacht, die erfindungsgemäße Ausbildung des Dachhimmels durch dessen Besprühen mit einem Mittel herbeizuführen, beispielsweise durch Besprühen des Dachhimmels mit Teflon.

Nachfolgend wird ein Ausführungsbeispiel der Erfindung, ohne hierauf beschränkt zu sein, unter Bezugnahme auf die Zeichnung näher erläutert. In der Zeichnung zeigt:
- Figur 1: einen Schnitt durch ein Kraftfahrzeug, quer zur Längserstreckung des Fahrzeugs geschnitten, im Bereich des Airbags und des Dachhimmels, bei teilweise entfaltetem Airbag, vor dem Wegdrücken des Dachhimmels mittels des Airbags,
- Figur 2: die Anordnung gemäß Figur 1 bei vollständig entfaltetem Airbag und damit weggedrücktem Dachhimmel.

Die Seitenaufprall-Schutzeinrichtung für Fahrgäste in einem Kraftfahrzeug weist einen aufblasbaren, im zusammengefalteten Zustand hinter, somit oberhalb dem Dachhimmel 1 des Fahrzeuges angeordneten Airbag 2 auf, dessen Inneres mit einem Gasgenerator 3 in Verbindung bringbar ist. Der Airbag 2 und der Gasgenerator 3 sind im zusammengefalteten Zustand des Airbags 2 innerhalb einer geschlossenen stabilen Aufnahme 4, einem so genannten Hard Cover angeordnet. Die Aufnahme 4 besteht aus Kunststoff und ist stationär im Fahrzeug gelagert, und zwar zwischen dem Dachhimmel 1 und der Fahrzeugstruktur 5. Die Aufnahme 4 ist im Bereich ihres unteren Endes mit Ansätzen 6 und 7 versehen, die im Ausgangszustand der Aufnahme 4, somit bei nicht entfaltetem Airbag 2, mittels einer Sollbruchstelle verbunden sind.

Bei nicht entfaltetem Airbag 2 stützt sich der Dachhimmel 1 beispielsweise an einer Verkleidung 8 der B-Säule des Fahrzeugs ab. Je nach Anwendungsfall kann der Dachhimmel 1, bei nicht entfaltetem Airbag 2, die B- und/oder C-Säule des Fahrzeugs oben hintergreifen, konkret die Verkleidung der jeweiligen Säule.

Auf seiner dem Airbag 2 zugewandten Seite 9 ist der Dachhimmel 1 glatt ausgebildet oder aber er ist auf dieser Seite mit einer Filzstruktur versehen, die in dem Bereich, den der Airbag 2 beim Auseinanderfalten kontaktiert, mit einer Folie 10 versehen, die mit der Seite 9 des Dachhimmels 1 verklebt ist.

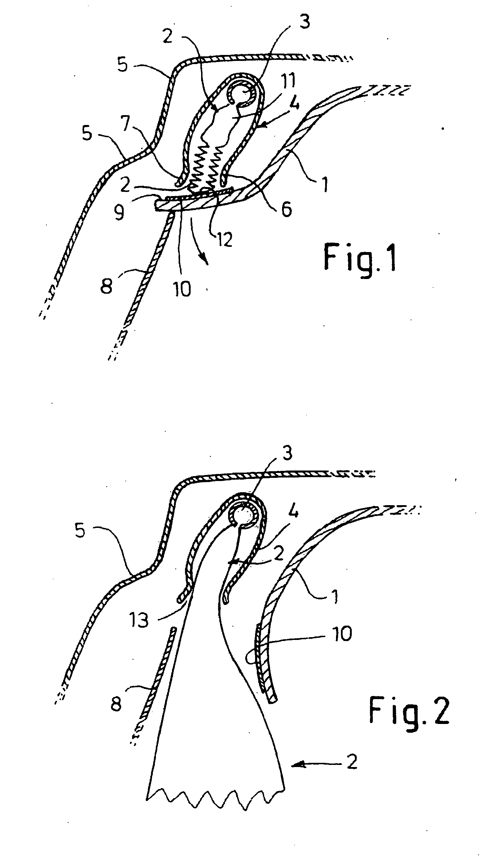

Beim Auslösen des zwischen dem Dachhimmel 1 und der Fahrzeugstruktur 5 angeordneten Airbags 2, somit beim Initiieren des Gasgenerators 3 wird der zusammengefaltete Airbag 2 mit Druckgas beaufschlagt, so dass er sich, ausgehend von seinem dem Gasgenerator 3 zugewandten Ende entfaltet. Dieser teilweise entfaltete Zustand ist in Figur 1 veranschaulicht. Dort ist gezeigt, dass der dem Gasgenerator 3 benachbarte Abschnitt 11 des Airbags 2 bereits entfaltet ist, während der dem Dachhimmel 1 zugewandte Abschnitt 12 des Airbags 2 noch in Falten liegt. Der Airbag 2 hat sich in diesem Zustand aber schon so weit ausgedehnt, dass die Sollbruchstelle zwischen den Ansätzen 6 und 7 der Aufnahme 6 gebrochen ist und sich so eine Austrittsöffnung 13 für den Airbag 2 gebildet hat. Der in Falten liegende Abschnitt 12 des Airbags 2 liegt am Dachhimmel 1 im Bereich der glatten Folie 10 an, ohne dass bislang der Dachhimmel 1 vom Airbag 2 weggedrückt worden ist.

Dieser letztgenannte Zustand ist in Figur 2 veranschaulicht: Der Airbag 2 ist weiter aufgeblasen und komplett entfaltet. Demzufolge ist durch den sich weiter entfaltenden Airbag 2 der Dachhimmel 1 von der Fahrzeugstruktur 5 wegbewegt worden, mit der Konsequenz, dass der Dachhimmel 1 außer Anlage mit der Verkleidung 8 gelangt ist und durch die Druckauslösung des Airbags 2 von der Fahrzeugstruktur 5 weggeschwenkt worden ist. Da der Dachhimmel 1 im Kontaktbereich mit dem Airbag 2 glatt ausgebildet ist, haftet der Airbag 2 nicht am Dachhimmel 1 und folgt demnach nicht der Schwenkbewegung des Dachhimmels 1. Vielmehr ist die Ausbreitrichtung des Airbags 2 im wesentlichen parallel zur Erstreckungsrichtung der Verkleidung 8. Durch die glatte Ausbildung des Dachhimmels 1 im interessierenden Bereich gleitet der Airbag 2 somit am sich öffnenden Dachhimmel 1 ab und zeigt ein besonders schnelles und optimal nach unten gerichtetes Entfaltungsverhalten.

Statt einer Folie kann die glatte Ausbildung des Dachhimmels beispielsweise auch durch Aufbringen eines glatten Klebebandes erzielt werden. Eine besonders gute Reibungsverminderung zwischen Airbag und Klebeband konnte beispielsweise erreicht werden durch Verwendung eines Klebebandes der Firma Coroplast Fritz Müller GmbH, Wittener Straße 271 D-42279 Wuppertal, die ein derartiges Klebeband unter der Bezeichnung Coroplast 1333 XE vertreibt. Dieses Klebeband erfüllt die Anforderungen für den Einsatz im Automobil, insbesondere unter dem Aspekt der Klebekraft und der Beständigkeit über einen weiten Temperaturbereich.

### Bezugszeichenliste

- Dachhimmel: 1
- Airbag: 2
- Gasgenerator: 3
- Aufnahme: 4
- Fahrzeugstruktur: 5
- Ansatz: 6
- Ansatz: 7
- Verkleidung: 8
- Seite: 9
- Folie: 10
- Abschnitt: 11
- Abschnitt: 12
- Austrittsöffnung: 13

## Patentansprüche

1. Seitenaufprall-Schutzeinrichtung für Fahrgäste in einem Kraftfahrzeug, mit mindestens einem aufblasbaren, im zusammengefalteten Zustand hinter dem Dachhimmel (1) des Fahrzeuges angeordneten Airbag (2), dessen Inneres mit einem Gasgenerator (3) in Verbindung bringbar ist, **dadurch gekennzeichnet, dass** der Dachhimmel (1) auf seiner dem Airbag (2) zugewandten Seite, in dem Bereich, der bei aktiviertem Airbag (2) den Airbag (2) kontaktiert, durch Aufbringung eines zusätzlichen Teils (10) in diesem Bereich, glatt ausgebildet ist.

2. Einrichtung nach Anspruch 1, **dadurch gekennzeichnet, dass** der Dachhimmel (1) auf seiner dem Airbag (2) zugewandten Seite eine Folie (10) oder ein glattes Band aufweist.

3. Einrichtung nach Anspruch 2, **dadurch gekennzeichnet, dass** die Folie (10) oder das Band mit einer Trägerstruktur des Dachhimmels (1) verklebt ist.

4. Einrichtung nach Anspruch 1, **dadurch gekennzeichnet, dass** der Dachhimmel (1) auf seiner dem Airbag (2) zugewandten Seite mit einem eine Glätte herbeiführenden Material versehen ist.

5. Einrichtung nach Anspruch 4, **dadurch gekennzeichnet, dass** das die Glätte herbeiführende Material Teflon ist.

6. Einrichtung nach Anspruch 4 oder 5, **dadurch gekennzeichnet, dass** das die Glätte herbeiführende Material auf den Dachhimmel (1) aufgesprüht ist.

7. Einrichtung nach einem der Ansprüche 1 bis 6, **dadurch gekennzeichnet, dass** der Airbag (2) zwischen dem Dachhimmel (1) und einer Fahrzeugstruktur (5) angeordnet ist.

8. Einrichtung nach Anspruch 7, **dadurch gekennzeichnet, dass** der Airbag (2) in einer geschlossenen stabilen Aufnahme (4) angeordnet ist, wobei die Aufnahme (4) beim Auseinanderfalten des Airbags (2) auf ihrer dem Dachhimmel (1) zugewandten Seite öffnet.

9. Einrichtung nach einem der Ansprüche 1 bis 8, **dadurch gekennzeichnet, dass** der Dachhimmel (1) bei nicht entfaltetem Airbag (2) die B- und/oder C-Säule des Fahrzeugs oben hintergreift.

## Claims

1. A lateral impact protection device for passengers in a motor vehicle, comprising at least one inflatable airbag (2) which is arranged in the folded state behind the roof lining (1) of the vehicle and the interior of which can be brought into connection with a gas generator (3), **characterized in that** on its side facing the airbag (2) the roof lining (1) is provided with a smooth arrangement by applying an additional part (10) in the region which makes contact with the airbag (2) when said airbag (2) is activated.

2. A device according to claim 1, **characterized in that** the roof lining (1) comprises a foil (10) or a smooth band on its side facing the airbag (2).

3. A device according to claim 2, **characterized in that** the foil (10) or the band is glued together with a support structure of the roof lining (1).

4. A device according to claim 1, **characterized in that** the roof lining (1) is provided with a material causing a smoothness on its side facing the airbag (2).

5. A device according to claim 4, **characterized in that** the material causing smoothness is Teflon.

6. A device according to claim 4 or 5, **characterized in that** the material causing smoothness is sprayed onto the roof lining (1).

7. A device according to one of the claims 1 to 6, **characterized in that** the airbag (2) is arranged between the roof lining (1) and a vehicle structure (5).

8. A device according to claim 7, **characterized in that** the airbag (2) is arranged in an enclosed stable receiver (4), with the receiver (4) opening on its side facing the roof lining (1) when the airbag (2) is unfolded.

9. A device according to one of the claims 1 to 8, **characterized in that** the roof lining (1) engages behind the B-pillar and/or C-pillar at the top when the airbag (2) is not unfolded.

## Revendications

1. Dispositif de protection contre les impacts latéraux pour les occupants d'un véhicule à moteur, avec au moins un coussin gonflable de protection (2) disposé dans l'état replié derrière le ciel de toit (1) du véhicule et dont l'intérieur peut être mis en communication avec un générateur de gaz (3), **caractérisé en ce que** le ciel de toit (1) est lisse sur sa face tournée vers le coussin gonflable de protection (2) dans la zone qui vient en contact avec le coussin gonflable de protection (2) quand le coussin gonflable de protection (2) est activé, grâce à l'application d'une pièce supplémentaire (10) dans cette zone.

2. Dispositif selon la revendication 1, **caractérisé en ce que** le ciel de toit (1) présente sur sa face tournée vers le coussin gonflable de protection (2) une feuille (10) ou une bande lisse.

3. Dispositif selon la revendication 2, **caractérisé en ce que** la feuille (10) ou la bande est collée à une structure portante du ciel de toit (1).

4. Dispositif selon la revendication 1, **caractérisé en ce que** le ciel de toit (1) est muni, sur sa face tournée vers le coussin gonflable de protection (2), d'un matériau réalisant une surface lisse.

5. Dispositif selon la revendication 4, **caractérisé en ce que** le matériau réalisant une surface lisse est du Téflon.

6. Dispositif selon la revendication 4 ou 5, **caractérisé en ce que** le matériau réalisant une surface lisse est pulvérisé sur le ciel de toit (1).

7. Dispositif selon l'une des revendications 1 à 6, **caractérisé en ce que** le coussin gonflable de protection (2) est disposé entre le ciel de toit (1) et une structure de véhicule (5).

8. Dispositif selon la revendication 7, **caractérisé en ce que** le coussin gonflable de protection (2) est disposé dans un logement (4) fermé et stable, lequel logement (4) s'ouvre lors du déploiement du coussin gonflable de protection (2) de son côté tourné vers le ciel de toit (1).

9. Dispositif selon l'une des revendications 1 à 8, **caractérisé en ce que** le ciel de toit (1) se met en prise, lorsque le coussin gonflable de protection (2) n'est pas déployé, derrière le haut du montant B ou du montant C du véhicule.
